# EUROPÄISCHE PATENTSCHRIFT

(11) **EP 3 481 974 B1**
(45) Veröffentlichungstag und Bekanntmachung des Hinweises auf die Patenterteilung: **14.10.2020**
(21) Anmeldenummer: 17761055.7
(22) Anmeldetag: 24.08.2017
(51) Int. Cl.: C25B 1/00, C25B 15/08, C25B 9/20

(54) **VERFAHREN UND VORRICHTUNG ZUR ELEKTROCHEMISCHEN VERWERTUNG VON KOHLENSTOFFDIOXID**
METHOD AND DEVICE FOR THE ELECTROCHEMICAL UTILIZATION OF CARBON DIOXIDE
PROCÉDÉ ET DISPOSITIF DE VALORISATION ÉLECTROCHIMIQUE DE DIOXYDE DE CARBONE

(30) Priorität: 27.09.2016 DE 102016218517; 18.10.2016 DE 102016220297
(43) Veröffentlichungstag der Anmeldung: 15.05.2019
(73) Patentinhaber: Siemens Aktiengesellschaft, 80333 München (DE)
(72) Erfinder: FERNÁNDEZ SANCHIS, Elvira María, 91052 Erlangen (DE); HANEBUTH, Marc, 90482 Nürnberg (DE); KRAUSE, Ralf, 91074 Herzogenaurach (DE); MELTZER, Katharina, 91052 Erlangen (DE)
(86) Internationale Anmeldenummer: PCT/EP2017/071294
(87) Internationale Veröffentlichungsnummer: WO 2018/059839

(56) Entgegenhaltungen:
- DE-A1- 4 235 125
- US-A1- 2011 237 839
- US-A1- 2012 277 465
- US-A1- 2013 105 304

## Beschreibung

Die Erfindung betrifft ein Verfahren und eine Vorrichtung zur elektrochemischen Verwertung von Kohlenstoffdioxid umfassend einen Elektrolyseur, eine Gaswäschevorrichtung und eine Elektrodialyseeinheit.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, insbesondere Plattformchemikalien oder Synthesegas. Besonders vorteilhaft werden diese Wertprodukte unter anderem aus Kohlenstoffdioxid hergestellt. Dies führt zu einer Verringerung der CO₂-Emissionen. Typische Wertprodukte sind insbesondere Substanzen wie Kohlenmonoxid und Ethylen. Eine mögliche Technik zur Umwandlung der elektrischen Energie bei gleichzeitiger Herstellung von Wertprodukten aus Kohlenstoffdioxid stellt die Elektrolyse dar.

Ein Elektrolyseur, welcher aus Kohlenstoffdioxid Wertstoffe produziert, wird typischerweise mit einem flüssigen Elektrolyten betrieben. Dieser flüssige Elektrolyt wird durch einen Anoden- und oder Kathodenraum geführt. Ein Teil des Edukts Kohlenstoffdioxid wird aus thermodynamischen und kinetischen Gründen in den flüssigen Elektrolyten überführt. Typischerweise bilden sich in dem flüssigen Elektrolyten während der Reduktion von Kohlenstoffdioxid an der Kathode Hydroxidionen, welche mit dem vorliegenden Kohlenstoffdioxid aus der Gasphase in Hydrogencarbonat umgewandelt werden. Effektiv wird dann Kohlenstoffdioxid aus der Gasphase entzogen. Da der flüssige Elektrolyt aus ökonomischen und ökologischen Gründen im Kreis geführt werden sollte, wird der Elektrolyt auf diese Weise in jedem Zyklus mit Kohlenstoffdioxid angereichert bis sich ein stationärer Zustand einstellt. In diesem stationären Zustand wird das System nachteilig dazu neigen, das Kohlenstoffdioxid an einer anderen Stelle im Prozess wieder abzugeben. Insbesondere wird das Abgeben über das Anodengas an die Umgebung erfolgen. Alternativ kann das Kohlenstoffdioxid in das Produktgas treten. Dies führt nachteilig zu geringeren Ausbeuten und einem Verlust an Kohlenstoffdioxid sowie einer Verdünnung des Produkts, insbesondere Kohlenstoffmonoxid, mit Kohlenstoffdioxid.

Es ist daher Aufgabe der Erfindung ein Verfahren und eine Vorrichtung anzugeben, welche den Kohlenstoffdioxidgehalt eines Produktgases eines Kohlenstoffdioxid-Elektrolyseurs verringert.

Die Aufgabe wird mit einem Verfahren gemäß Anspruch 1 und einer Vorrichtung gemäß Anspruch 11 gelöst. Das erfindungsgemäße Verfahren zur elektrochemischen Verwertung von Kohlenstoffdioxid umfasst mehrere Schritte. Das Reduzieren von Kohlenstoffdioxid zu einem Produktgas erfolgt in einer Elektrolysezelle eines Elektrolyseurs. Das Produktgas, welches Kohlenstoffmonoxid und nicht umgesetztes Kohlenstoffdioxid umfasst, wird in eine Gaswäschevorrichtung geführt. Das Waschen des Produktgases von dem Kohlenstoffdioxid erfolgt in der Gaswäschevorrichtung mittels eines Absorptionsmittels. Das Absorptionsmittel wird in einer Elektrodialysezelle einer Elektrodialyseeinheit regeneriert und anschließend wenigstens teilweise in die Gaswäschevorrichtung zurückgeführt. Das dabei frei werdende Kohlenstoffdioxid wird wenigstens teilweise in den Elektrolyseur als Eduktgas zurückgeführt.

Die erfindungsgemäße Vorrichtung zum Durchführen des Verfahrens zur elektrochemischen Verwertung von Kohlenstoffdioxid umfasst einen Elektrolyseur mit wenigstens einer Elektrolysezelle zur Reduktion von Kohlenstoffdioxid zu einem Produktgas, welches Kohlenstoffmonoxid enthält. Weiterhin umfasst die erfindungsgemäße Vorrichtung eine Gaswäschevorrichtung, welche ausgestaltet ist, nicht umgesetztes Kohlenstoffdioxid aus dem Produktgas wenigstens teilweise in ein Absorptionsmittel zu absorbieren. Die Vorrichtung umfasst weiterhin eine Elektrodialyseeinheit mit wenigstens einer Elektrodialysezelle geeignet zum Regenerieren des während der Absorption mit Kohlenstoffdioxid angereicherten Absorptionsmittels. Das Absorptionsmittel wird dann zweckmäßigerweise über entsprechende Rohrleitungen wenigstens teilweise zurück in die Gaswäschevorrichtung geführt. Das freigesetzte Kohlenstoffdioxid wird wenigstens teilweise als Eduktgas in den Elektrolyseur zurückgeführt.
In einer Elektrodialyseeinheit werden Anionen und Kationen zu den jeweiligen Elektroden mittels eines externen elektrischen Feldes transportiert. Dabei wandern die Anionen zur Anode und die Kationen zur Kathode. Während des Wanderns werden die Anionen und Kationen durch Kationen- bzw. Anionen-selektive Membranen geführt. Die Kationen und Anionen-selektive Membranen sind dabei abwechselnd angeordnet. Die Anionen können die positivgeladene Anionen-selektive Membran passieren, aber sie werden an der nächsten negativgeladenen Kationen-selektiven Membran gestoppt. Dasselbe passiert, mit umgekehrtem Vorzeichen, auch mit den Kationen. Der Effekt der Elektrodialyse besteht daher in eine Anreicherung der Ionen alle zwei Kammern. In der Kammer dazwischen erfolgt eine Abreicherung der Ionen.
Das erfindungsgemäße Verfahren ermöglicht vorteilhaft das Waschen des Produktgases von Kohlenstoffdioxid in einer Gaswäscheeinheit, wobei das Kohlenstoffdioxid aus dem Produktgas entfernt wird. In der Gaswäscheeinheit können vorteilhaft bereits geringe Konzentrationen Kohlenstoffdioxids aus dem Gas entfernt werden. Vorteilhaft wird bei dem Einsatz einer Gaswäscheeinheit vermieden, dass Kohlenstoffdioxid aus dem System verloren geht, da das Kohlenstoffdioxid wenigstens teilweise in den Elektrolyseur zurückgeführt wird. Im Gegensatz dazu verlässt das Kohlenstoffdioxid das System, wenn das Kohlenstoffdioxid nicht aus dem Produktgas entfernt wird.

Alternativ wäre auch denkbar, den Elektrolyt aufzukonzentrieren, dann Carbonat oder Hydrogencarbonat auszufällen, zu trocknen und das Kohlenstoffdioxid anschließend thermisch durch Brennen auszutreiben und es dann zurückzuführen. Dem gegenüber ermöglicht eine Elektrodialyse vorteilhaft sowohl in Bezug auf die eingesetzten Apparate als auch in Bezug auf die aufzuwendende Energie ein effizienteres Zurückführen des Kohlenstoffdioxids.

Die Elektrodialyseeinheit umfasst insbesondere mehrere Elektrodialysezellen, der Elektrolyseur umfasst ebenfalls insbesondere mehrere Elektrolysezellen, welche typischerweise in sogenannten Stacks angeordnet werden.

In einer vorteilhaften Ausgestaltung und Weiterbildung der Erfindung wird in der Elektrolysezelle ein salzhaltiger flüssiger Elektrolyt verwendet. In dem salzhaltigen flüssigen Elektrolyten reichert sich während der Elektrolyse Kohlenstoffdioxid an. Dieser mit Kohlenstoffdioxid angereicherte salzhaltige flüssige Elektrolyt wird ebenfalls in die Elektrodialysezelle geführt. In der Elektrodialysezelle wird der Gehalt an Kohlenstoffdioxid mittels Elektrodialyse in dem salzhaltigen flüssigen Elektrolyt verringert indem gasförmiges Kohlenstoffdioxid gebildet wird.

Vorteilhaft ermöglicht dies ein Imkreisführen des flüssigen Elektrolyten in dem Verfahren. Das Kohlenstoffdioxid kann kontinuierlich aus dem mit Kohlenstoffdioxid angereicherten Elektrolyten nach dem Elektrolyseur entfernt werden. Es kann dann besondere in den Elektrolyseur zurückgeführt werden und dort wiederum als Elektrolyt verwendet werden. Vorteilhaft ermöglicht dies, einen ökonomischen Betrieb der Elektrolysezelle und somit des gesamten Elektrolyseurs, da der flüssige Elektrolyt vielfach im Kreis geführt werden kann.

In einer weiteren vorteilhaften Ausgestaltung und Weiterbildung der Erfindung wird als Absorptionsmittel in der Gaswäschevorrichtung der salzhaltige flüssige Elektrolyt mit dem verringerten Kohlenstoffdioxidgehalt verwendet. Vorteilhaft wird der Einsatz eines zusätzlichen Absorptionsmittels vermieden, was die Effizienz des Verfahrens erhöht und den Prozess ökologisch gestaltet, da der salzhaltige flüssige Elektrolyt kontinuierlich im Kreis geführt werden kann.

In einer vorteilhaften Ausgestaltung und Weiterbildung der Erfindung umfasst die Elektrodialysezelle eine Mehrzahl bipolarer Membranen und eine Mehrzahl Kationen-selektiver Membranen, welche abwechselnd zwischen einer Anode und einer Kathode angeordnet sind. Bipolaren Membranen umfassen eine Kationen- und eine Anionen-selektive Membran und eine dazwischen angeordnete katalytische Zwischenschicht, welche die Dissoziation von Wasser in Protonen und Hydroxidionen beschleunigt. Durch die Membranen werden erste Kammern und zweite Kammern gebildet, wobei die erste Kammer zur Anode hin von der bipolaren Membran und die zweite Kammer zur Anode hin von der Kationen-selektiven Membran begrenzt sind. Die bipolare Membran ermöglicht so, bei einem anliegenden elektrischen Feld, eine Aufspaltung von Wassermolekülen in Protonen und Hydroxidionen, wobei die unterschiedlichen Ionen auf den beiden gegenüberliegenden Seiten der bipolaren Membran angereichert werden. Der salzhaltige flüssige Elektrolyt wird in die erste Kammer geleitet.

Vorteilhaft wird in der ersten Kammer der Kohlenstoffdioxidgehalt des salzhaltigen flüssigen Elektrolyten verringert. Der Einsatz der bipolaren Membran ermöglicht dies vorteilhaft unabhängig vom pH-Wert des Absorptionsmittels, bzw. des salzhaltigen flüssigen Elektrolyten. Beim Anlegen einer Spannung wandert das Salzkation des salzhaltigen flüssigen Elektrolyten, bevorzugt Kalium oder Natrium, besonders bevorzugt Kalium, durch die Kationen-selektive Membran von der ersten in die zweite Kammer zur Kathode hin. Als Ladungsausgleich werden dann Wasserstoffionen aus der bipolaren Membran nachgeführt. Dies verschiebt das thermodynamische Gleichgewicht in der ersten Kammer derart, dass der Partialdruck von Kohlenstoffdioxid steigt. Es ist dann möglich den Partialdruck des Kohlenstoffdioxids über den Umgebungsdruck zu steigern, so dass das Kohlenstoffdioxid mit einem einfachen Phasentrenner entfernt werden kann.

In einer weiteren vorteilhaften Ausgestaltung und Weiterbildung der Erfindung wird der salzhaltige flüssige Elektrolyt zunächst in die ersten Kammern der Elektrodialyseeinheit geleitet und, nachdem gasförmiges Kohlenstoffdioxid in einem Phasentrenner abgetrennt wurde, anschließend in die zweiten Kammern der Elektrodialyseeinheit geleitet. Vorteilhaft wird der flüssige Elektrolyt in der ersten Kammer von Kohlenstoffdioxid abgereichert. Das bedeutet Carbonate, Hydrogencarbonate aber auch Kationen, insbesondere Kalium oder Natrium, werden dem flüssigen Elektrolyten entnommen. Durch das Zurückführen durch die zweite Kammer der Elektrodialyseeinheit wird der flüssige Elektrolyt wiederum mit diesen Kationen, insbesondere Kalium oder Natrium, angereichert. Besonders bevorzugt werden als Salze Kaliumhydrogencarbonat oder Kaliumsulfat verwendet, sodass Kalium im salzhaltigen flüssigen Elektrolyt innerhalb der zweiten Kammern angereichert wird. Dieses mit Salz, insbesondere mit Kalium, angereicherte salzhaltige flüssige Elektrolyt kann zurück in die Elektrolyse geführt werden und weist vorteilhaft eine konstant gute Leitfähig auf.

In einer weiteren vorteilhaften Ausgestaltung und Weiterbildung der Erfindung sind im Wechsel mit den bipolaren Membranen Anionen-selektive Membranen angeordnet. Durch die Membranen werden erste Kammern und zweite Kammern gebildet, wobei die erste Kammer zur Anode hin von der bipolaren Membran und die zweite Kammer zur Anode hin von der Anionen-selektiven Membran begrenzt sind, und der salzhaltigen Elektrolyt in die zweiten Kammern geleitet wird. Bei Anlegen einer Spannung wandern vorliegende Hydrogencarbonationen und/oder Carbonationen durch die Anionen-selektive Membran von der zweiten in die erste Kammer in Richtung der Anode. Aus der bipolaren Membran werden dann Wasserstoffionen in die erste Kammer nachgeführt, wodurch Kohlenstoffdioxid und Wasser aus dem Hydrogencarbonation und dem Wasserstoff entstehen. Das Kohlenstoffdioxid kann dann wiederum mittels eines Phasentrenners entfernt werden.

In einer weiteren vorteilhaften Ausgestaltung und Weiterbildung der Erfindung wird der Elektrolyseur mit einem geringen Überschuss an Kohlenstoffdioxid betrieben. Vorteilhaft entsteht dann kaum Wasserstoff in dem Kathodenraum. Wasserstoff ist in diesem Fall eine unerwünschte Komponente des Produktgases. Das erwünschte Produktgas umfasst Kohlenstoffmonoxid. Zusätzlich kann in der Elektrolysezelle auch Ethylen hergestellt werden.
In einer vorteilhaften Ausgestaltung und Weiterbildung der Erfindung wird die Elektrodialyseeinheit bei einem höheren Betriebsdruck betrieben als der Elektrolyseur. Dies hat den Vorteil, dass für die Rückführung von Kohlenstoffdioxid aus der Elektrodialyseeinheit in den Elektrolyseur kein zusätzliches Gebläse nötig ist.
In einer weiteren vorteilhaften Ausgestaltung und Weiterbildung der Erfindung ist die Elektrodialyseeinheit in den Elektrolyseur integriert. Integriert bedeutet hier, dass die Elektrodialyseeinheit und der Elektrolyseur von derselben ersten negativ geladenen Endplatte und derselben positiv geladenen zweite Endplatte begrenzt werden. Zwischen dieser ersten und der zweiten Endplatte sind sowohl die Membranen der Elektrodialyseeinheit als auch die Membranen und Elektroden des Elektrolyseurs angeordnet. Jede Elektrolysezelle wird durch eine jeweilige Anode und Kathode begrenzt. Vorteilhaft ermöglicht dies eine besonders kompakte Bauweise und die Einsparung von Material.

In einer weiteren vorteilhaften Ausgestaltung und Weiterbildung der Erfindung umfassen die Elektrodialyseeinheit und der Elektrolyseur eine gemeinsame Spannungsquelle. Dies spart, verglichen mit dem konventionellen Aufbau mit einer Elektrodialyseeinheit, welche getrennt von dem Elektrolyseur mit Strom versorgt wird, Material.

In einer weiteren vorteilhaften Ausgestaltung und Weiterbildung der Erfindung ist die Anzahl der Elektrolysezellen größer als die Anzahl der Elektrodialysezellen. Vorteilhaft stehen dann die Größenordnungen der jeweiligen Zellen und auch deren Stoffströme in einem solchen Verhältnis zueinander, dass einerseits das entstehende Produktgas gereinigt werden kann, ohne in einem Speicher vor der Reinigung in der Elektrodialyseeinheit zwischengelagert zu werden. Andererseits ist die Elektrodialyseeinheit auch nicht zu groß für den entstehenden Produktgasstrom dimensioniert.

Weitere Ausgestaltungsformen und weitere Merkmale der Erfindung werden anhand der folgenden Figuren näher erläutert. Dabei zeigen:
- Figur 1: ein Phasendiagramm von Kaliumionen und Kohlenstoffdioxid;
- Figur 2: eine Vorrichtung mit einer Gaswäschevorrichtung, einem Elektrolyseur, und einer Elektrodialyseeinheit;
- Figur 3: eine Detailansicht der Elektrodialyseeinheit mit einem Phasenabscheider;
- Figur 4: eine integrierte Elektrodialyse- und Elektrolyseur-Einheit.

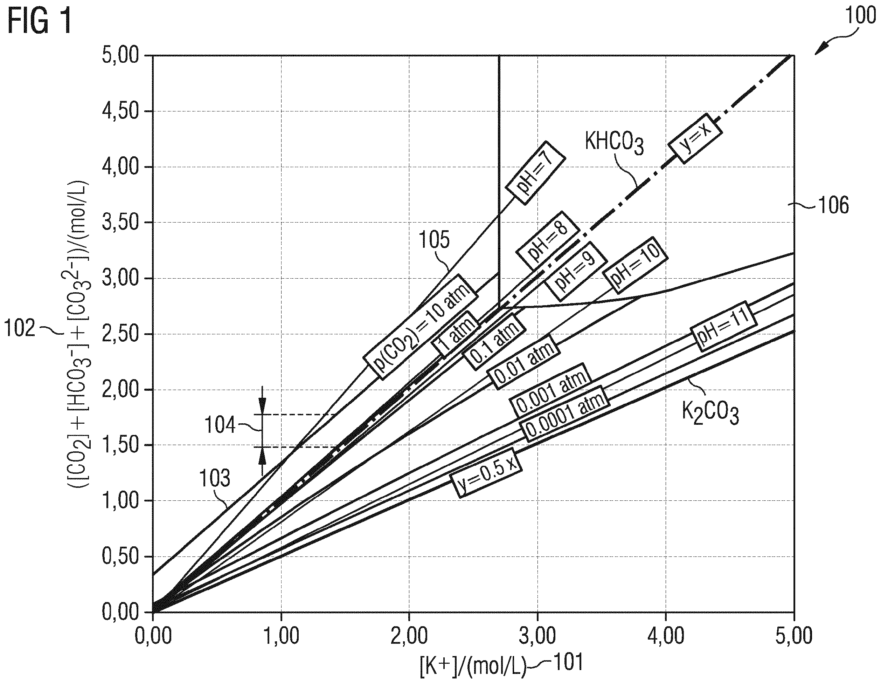

Figur 1 zeigt ein Phasendiagramm eines typischen Elektrolyten eines Elektrolyseurs. Dieser Elektrolyt umfasst insbesondere Kaliumhydroxid, also auch Kaliumionen, um die Leitfähigkeit des Elektrolyten zu gewährleisten. Der Elektrolyt umfasst weiterhin Kohlenstoffdioxid, wobei die Konzentration des Kohlenstoffdioxids während des Elektrolyseprozesses variiert, das heißt in der Regel im Elektrolyten als Katholyt zunimmt.

Das in Figur 1 gezeigte Phasendiagramm zeigt den Zusammenhang zwischen Kaliumionen auf der x-Achse und der Kohlenstoffdioxidkonzentration auf der y-Achse. Aufgetragen sind die Gleichgewichtskonzentrationen bei einer Temperatur von 25 °C. Das Kohlenstoffdioxid kann als Kohlenstoffdioxid, Hydrogencarbonat oder Carbonat gelöst in der Kaliumhydroxidlösung vorliegen. Auf der y-Achse ist die Summe dieser drei Komponenten aufgetragen. Die angegebenen Mengen entsprechen mol/l. Im Phasendiagramm ist in der oberen rechten Ecke ein Gebiet zu sehen, in dem festes Kaliumhydrogen- oder Kaliumcarbonat ausfallen kann. Das bedeutet, dass an dieser Stelle das Löslichkeitsprodukt für Kaliumhydrogencarbonat oder Kaliumcarbonat überschritten wurde. Das restliche Gebiet des Diagramms zeigt eine flüssige Phase. Die Isobaren 103 geben den Partialdruck von Kohlenstoffdioxid an. Weiterhin ist in dem Phasendiagramm eingezeichnet, bei welcher Konzentration reine Lösungen von Kaliumcarbonat K2CO3 und Kaliumhydrogencarbonat KHCO3 lägen, wenn sämtliche Kohlenstoffhaltige Spezies Carbonat und/oder Hydrogencarbonat wären. Auch eingezeichnet sind unterschiedliche pH-Werte 105.

Das Phasendiagramm verdeutlicht, dass sich mit steigender Kaliumkonzentration eine größere Menge Kohlenstoffdioxid im Elektrolyten löst. Der absolute Wert hängt dabei stark vom herrschenden Kohlenstoffdioxid-Partialdruck 103 ab. Bei sehr niedrigen Kohlenstoffdioxid-Partialdrücken 103 liegt das Kohlenstoffdioxid nahezu vollständig in Form von Kaliumcarbonat K2CO3 vor. Mit höheren Partialdrücken 103 des Kohlenstoffdioxids liegt neben dem Kaliumcarbonat K2CO3 auch Kaliumhydrogencarbonat KHCO3 vor. Beträgt der Kohlenstoffdioxid-Partialdruck 103 in etwa Umgebungsdruck, liegt das gelöste Kohlenstoffdioxid zum größten Teil als Kaliumhydrogencarbonat KHCO3 vor. Erhöht man den Partialdruck des Kohlenstoffdioxids weiter, löst sich zusätzlich zum Kaliumhydrogencarbonat KHCO3 physikalisch Kohlenstoffdioxid CO2 in signifikanter Menge.

Das Phasendiagramm beruht auf der Annahme, dass thermodynamisches Gleichgewicht herrscht. Weiterhin wurde ein ideales Verhalten vorausgesetzt, Realeffekte also vernachlässigt. Das Phasendiagramm verdeutlicht, dass sich bei einer höheren Kaliumkonzentration und einem höheren Kohlenstoffdioxid-Partialdruck 103 mehr Kohlenstoffdioxid löst. Wird nun der Elektrolyt eines Elektrolyseurs im Kreis geführt, reichert sich das gelöste Kohlenstoffdioxids bis zum Erreichen eines stationären Zustands an. Dieser Partialdruck liegt typischerweise in der Nähe des Partialdruck eines Eduktgases eines Kohlenstoffdioxid-Elektrolyseurs. In Abhängigkeit davon, wie das Elektrolysesystem aufgebaut ist, wird es zu einem Entweichen von Kohlenstoffdioxid aus dem Elektrolysesystem kommen. Wird in einem Elektrolysesystem ein sogenannter gemeinsamer Elektrolyt verwendet, wird dieser als Anolyt und als Katholyt parallel durch einen Anoden und einen Kathodenraum des Elektrolyseurs geführt und danach wieder miteinander vermischt werden. Nimmt man an, dass ausschließlich Kaliumionen durch eine Kationen-permeable Membran, welche in dem Elektrolyseur zwischen einem Anodenraum und einem Kathodenraum angeordnet ist, Membran transportiert werden, und die einzige ionenleitende Spezies von der Kathode weg Hydrogencarbonat ist, wandert der Katholyt im Phasendiagramm diagonal nach rechts oben, während der Anolyt horizontal nach links zu niedrigeren Kaliumkonzentrationen wandert. Daher wird das Kohlenstoffdioxid nach Erreichen des stationären Zustands in das Anodengas und/oder bei dem Zusammenführen von Anolyt und Katholyt in die Umgebung freigesetzt. Das bedeutet auch, dass nachteiligerweise lediglich ein Drittel des Kohlenstoffdioxids für die Herstellung des Produktgases umfassend Kohlenstoffmonoxid verwendet werden.

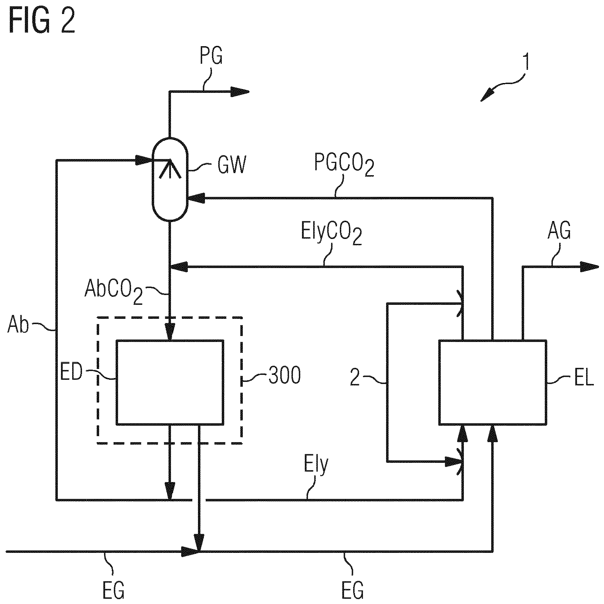

Figur 2 verdeutlicht, wie sich das Problem des Anreicherns an Kohlenstoffdioxid in einem Elektrolyt eines Kohlenstoffdioxid-Elektrolyseurs bei gleichzeitigem Verlust von Kohlenstoffdioxid in das Anodengas oder in die Umgebung verringern bzw. vermeiden lässt. Figur 2 zeigt eine Vorrichtung 1 umfassend eine Gaswäschevorrichtung GW, einen Elektrolyseur EL und eine Elektrodialyseeinheit ED. In den Elektrolyseur EL wird ein Eduktgas EG geführt. Das Eduktgas EG umfasst typischerweise Kohlenstoffdioxid. In dem Elektrolyseur EL wird dieses Kohlenstoffdioxid in einem Kathodenraum an einer Kathode zu Kohlenstoffmonoxid reduziert. Der elektrische Strom und der Strom des Eduktgases EG sind so gewählt, dass ein Kohlenstoffdioxid-Überschuss in dem Produktgas vorhanden ist, jedoch die Bildung von unerwünschtem Wasserstoff möglichst minimiert wird.

Dieser Restanteil an Kohlenstoffdioxid kann dann in der Gaswäschevorrichtung GW entfernt werden. Zeitgleich wird in einem Anodenraum des Elektrolyseurs EL Sauerstoff produziert. Der Sauerstoff verlässt den Elektrolyseur EL als Anodengas AG. Das Produktgas umfassend Kohlenstoffmonoxid und nicht umgesetztes Kohlenstoffdioxid PGCO2 verlässt den Elektrolyseur EL und wird in die Gaswäschevorrichtung GW geführt. Der Elektrolyt Ely, bzw. ElyCO2 wenn dieser mit Kohlenstoffdioxid angereichert ist, kann optional wenigstens teilweise direkt zurück in den Elektrolyseur EL geführt werden. Der Elektrolyt Ely kann ebenfalls optional wenigstens teilweise in die Elektrodialyseeinheit ED geführt werden. In diesem Beispiel wird der Elektrolyt ElyCO2 in die Elektrodialyseeinheit ED geführt und dort von Kohlenstoffdioxid befreit. Der Elektrolyt Ely dient dann ebenfalls als Absorptionsmittel Ab in der Gaswäschevorrichtung GW.

Es ist aber ebenso möglich, dass der Elektrolyt ElyCO2 nicht in die Elektrodialyseeinheit ED geführt wird, sondern ausschließlich über die Elektrolytrückführung 2 direkt zurück in den Elektrolyseur EL geführt wird. Nicht gezeigt, aber alternativ ist es dann möglich, dass der Elektrolyt Ely in einer zweiten Elektrodialyseeinheit von Kohlenstoffdioxid gereinigt wird und dann zurück in den Elektrolyseur EL geführt wird. Es kann dann vorteilhaft ein Absorptionsmittel unabhängig vom Elektrolyt des Elektrolyseurs gewählt werden.

In diesem Beispiel wird als Absorptionsmittel der Elektrolyt Ely verwendet, nachdem dieser von Kohlenstoffdioxid in der Elektrodialyseeinheit ED abgereichert wurde. Als Elektrolyt wird insbesondere Kaliumhydroxid KOH verwendet. Kaliumhydroxid weist sowohl eine hohe Löslichkeit für Kohlenstoffdioxid als auch eine hohe Leitfähigkeit auf.

Der mit Kohlenstoffdioxid beladene Elektrolyt ElyCO2 wird zusammen mit dem in der Gaswäschevorrichtung GW mit Kohlenstoffdioxid beladenen Absorptionsmittel AbCO2 in die Elektrodialyseeinheit ED geführt. Dort wird der Kohlenstoffdioxidanteil im Absorptionsmittel bzw. im Elektrolyten, deutlich verringert. Das regenerierte Absorptionsmittel Ab wird anschließend wenigstens teilweise zurück in die Gaswäschevorrichtung GW geführt. Es wird ebenfalls wenigstens teilweise als Elektrolyt Ely zurück in den Elektrolyseur EL geführt. Vorteilhaft kann der Elektrolyt Ely so im Kreis geführt werden, ohne dass es zu einer Anreicherung von Kohlenstoffdioxid kommt, welche nachteiligerweise das Anodengas AG verunreinigt oder die Vorrichtung 1 unkontrolliert verlässt.

Es ist weiterhin vorteilhaft möglich, dass das in der Elektrodialyseeinheit ED abgetrennte Kohlenstoffdioxid dem Eduktgas EG zumindest teilweise zugeführt wird und so wiederum im Elektrolyseur EL zu Kohlenstoffmonoxid umgesetzt werden kann.

Die Detailansicht 300 verdeutlicht den Aufbau der Elektrodialyseeinheit und den Phasenabscheider 305.

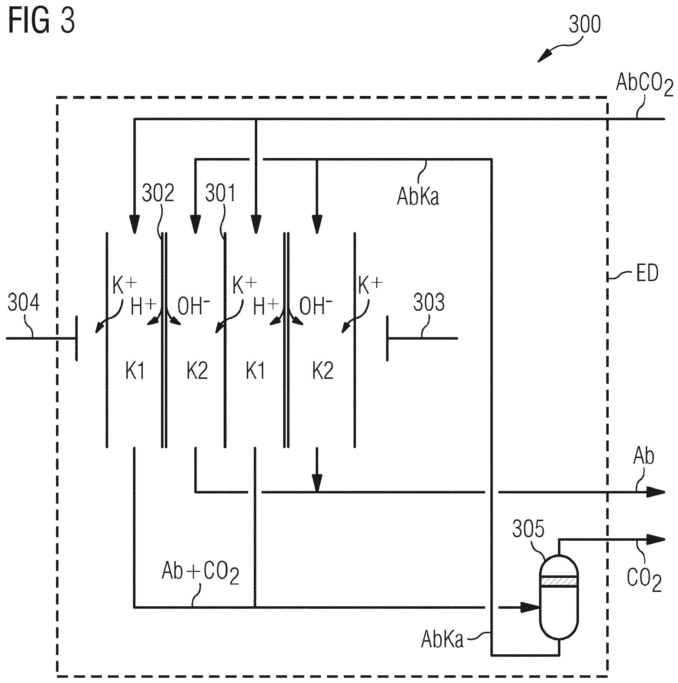

Figur 3 zeigt die Elektrodialyseeinheit ED mit einem Phasenabscheider 305. Das mit Kohlenstoffdioxid beladene Absorptionsmittel AbCO2, welches bereits mit dem mit Kohlenstoffdioxid beladenen Elektrolyten ElyCO2 gemischt wurde, wird zunächst in die Elektrodialyseeinheit ED hineingeführt. In der Elektrodialyseeinheit ED sind abwechselnd bipolare Membranen 302 und Kationen-selektive Membranen 301 angeordnet. Die Membranen 301, 302 begrenzen erste Kammern K1 und zweite Kammern K2. Die zweiten Kammern K2 werden zur Anode 303 hin von der Kationen-selektiven Membran 301 begrenzt. Die ersten Kammern K1 werden zur Anode 303 hin von der bipolaren Membran 302 begrenzt.

Das mit Kohlenstoffdioxid beladene Absorptionsmittel AbCO2 wird zunächst in die ersten Kammern K1 geführt. In den ersten Kammern K1 wird durch Anlegen von Spannung an die Kathode 304 und die Anode 303 ein Ionenfluss erzeugt. Die Kaliumionen können die Kationen-permeable Membran 301 passieren. Als Ladungsausgleich werden aus der Zwischenschicht der bipolaren Membran 302 Protonen in die ersten Kammern K1 geführt. Durch das Abreichern von Kaliumionen steigt der Partialdruck des Kohlenstoffdioxids in den ersten Kammern K1 an. Dies wird im Phasendiagramm der Figur 1 verdeutlicht. Das Absorptionsmittel verlässt dann mit dem erhöhten Partialdruck an Kohlenstoffdioxid die ersten Kammern und wird in einen Phasentrenner 305 geführt. Dort wird insbesondere nach dem Einstellen des Flüssig-Gas-Phasengleichgewichts das Kohlenstoffdioxid aus dem Absorptionsmittel physikalisch abgetrennt.

Das Absorptionsmittel ist nun von Kohlenstoffdioxid abgereichert, allerdings nachteiligerweise auch von Kaliumionen. Daher wird das Kaliumarme Absorptionsmittel AbKa zurück in die Elektrodialyseeinheit ED geführt, diesmal allerdings in die zweiten Kammern. In den zweiten Kammern wird das Absorptionsmittel AbKa wiederum mit Kalium angereichert. Das so regenerierte Absorptionsmittel Ab hat vorteilhafterweise eine hohe Leitfähigkeit durch die Kaliumkonzentration und kann dann teilweise in den Elektrolyseur EL zurückgeführt werden oder als Absorptionsmittel der Gaswäschevorrichtung GW zugeführt werden. Besonders vorteilhaft liegt in dem regenerierten Absorptionsmittel Ab wiederum Kaliumhydroxid vor.

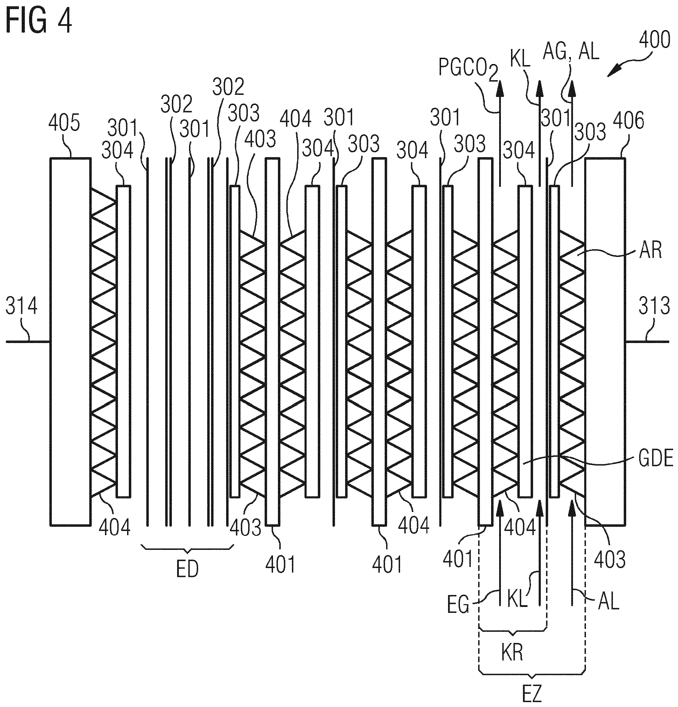

In Figur 4 wird ein Aufbau gezeigt, bei dem die Elektrodialyseeinheit ED in den Elektrolyseur EL integriert ist. Dabei wird ausgenutzt, dass typischerweise an den Elektroden von Elektrodialyse-Systemen Elektrolyse stattfindet und typischerweise Wasserstoff und Sauerstoff hergestellt wird. Dies hat spezielle Elektrodenspülungen zur Folge, welche den Aufbau der Elektrodialyseeinheit ED nachteiligerweise kompliziert gestalten. Um diese Nebeneffekt auszunutzen, kann die Elektrodialyseeinheit ED in den Elektrolyseur EL integriert werden. Integriert bedeutet hier, dass die Elektrodialyseeinheit ED und die Elektroanalysezellen EZ eine gemeinsame positivgeladene Endplatte 313 und eine negativgeladenen Endplatte 314 umfassen. Zwischen den einzelnen Zellen sind jeweils Kontaktierung der Anode 403 und Kontaktierung der Kathode 404 angeordnet. Eine Elektrolysezelle EZ umfasst typischerweise eine Anode 303, welche direkt auf eine Kationen-selektive Membran 301 aufgebracht ist. Der Anodenraum AR wird auf der einen Seite von der Anode 303 und auf der gegenüberliegenden Seite von der zweiten Endplatte 406 oder, in Abhängigkeit von der Position, von der bipolaren Platte 401 begrenzt. Die Elektrolysezelle EZ umfasst weiterhin einen Kathodenraum KR, der von einer Gasdiffusionselektrode GDE, welche als Kathode 304 eingesetzt wird, unterteilt wird. In der Figur 4 strömt links der GDE das Eduktgas, also insbesondere Kohlenstoffdioxid entlang und wird dort zu Kohlenstoffmonoxid reduziert. Rechts der GDE fließt der flüssige Katholyt KL, also ein Anteil des Elektrolyts Ely, entlang und wird mit dem Eduktgas EG innerhalb der GDE kontaktiert. In den Anodenraum wird ein flüssiger Anolyt AL, insbesondere ein weiterer Anteil Elektrolyt Ely, geführt und mit Anodengas, insbesondere Sauerstoff O2, angereichert. Der Aufbau der Elektrolysezelle EZ kann auch bei der nicht integrierten Variante der Ausführungsbeispiele in Figuren 2 bis 3 analog erfolgen.

In Figur 4 sind sämtliche Medieneingänge in die Elektrolysezelle EZ unten und sämtliche Ausgänge der Elektrolysezelle EZ oben gezeigt. Diese Form der Darstellung dient einer besseren Übersicht. Die Fließrichtungen können ebenso umgekehrt erfolgen, ohne den Rahmen der Erfindung zu verlassen. Typischerweise umfasst diese integrierte Vorrichtung mehr Elektrolysezellen EZ als Elektrodialyseeinheiten ED.

## Patentansprüche

1. Verfahren zur elektrochemischen Verwertung von Kohlenstoffdioxid umfassend folgende Schritte:
- Reduzieren von Kohlenstoffdioxid zu einem Produktgas umfassend Kohlenstoffmonoxid (PGCO2) in einer Elektrolysezelle (EZ) eines Elektrolyseurs (EL),
- Führen des Produktgases (PGCO2) umfassend Kohlenstoffdioxid in eine Gaswäschevorrichtung (GW),
- Waschen des Produktgases (PGCO2) von Kohlenstoffdioxid mittels eines Absorptionsmittels (Ab) in der Gaswäschevorrichtung (GW),
- Regenerieren des Absorptionsmittels (AbCO2) in einer Elektrodialysezelle einer Elektrodialyseeinheit (ED),
- wenigstens teilweises Zurückführen des regenerierten Absorptionsmittels (Ab) in die Gaswäschevorrichtung (GW),
- wenigstens teilweises Zurückführen des während des Regenerierens frei gewordenen Kohlenstoffdioxids als Eduktgas (EG) in den Elektrolyseur (EL).

2. Verfahren nach Anspruch 1, wobei in der Elektrolysezelle (EZ) ein salzhaltiger flüssiger Elektrolyt (Ely) verwendet wird, in dem sich während der Elektrolyse Kohlenstoffdioxid anreichert und der mit Kohlenstoffdioxid angereicherte salzhaltige flüssige Elektrolyt (ElyCO2) in die Elektrodialysezelle geführt wird und in der Elektrodialysezelle (EZ) mittels Elektrodialyse der Kohlenstoffdioxidgehalt in dem salzhaltigen flüssigen Elektrolyt verringert wird.

3. Verfahren nach Anspruch 2, wobei als Absorptionsmittel (Ab) in der Gaswäschevorrichtung (GW) der salzhaltige flüssige Elektrolyt (Ely) mit dem verringerten Kohlenstoffdioxidgehalt verwendet wird.

4. Verfahren nach einem der vorhergehenden Ansprüche, wobei die Elektrodialysezelle (ED) eine Anode (303) und eine Kathode (304) umfasst und zwischen Anode (303) und Kathode (304) eine Mehrzahl von bipolaren Membranen (302) und eine Mehrzahl von Kationen-selektiven Membranen (301) abwechselnd angeordnet sind und durch die Membranen erste Kammern (K1) und zweite Kammern (K2) gebildet werden, wobei die ersten Kammern (K1) zur Anode (303) hin von der bipolaren Membran (302) und die zweiten Kammern (K2) zur Anode (303) hin von der Kationen-selektiven Membran (301) begrenzt sind, und der salzhaltigen Elektrolyt (Ely) und/oder das Absorptionsmittel (Ab) in die ersten Kammern (K1) geleitet wird.

5. Verfahren nach Anspruch 4, wobei der salzhaltige Elektrolyt (Ely) zunächst in die ersten Kammern (K1) der Elektrodialysezelle geleitet wird, und anschließend in die zweiten Kammern (K2) der Elektrodialysezelle geleitet wird.

6. Verfahren nach einem der Ansprüche 1 bis 3, wobei die Elektrodialysezelle eine Anode (303) und eine Kathode (304) umfasst und zwischen Anode (303) und Kathode (304) eine Mehrzahl von bipolaren Membranen (302) und eine Mehrzahl von Anionen-selektiven Membranen abwechselnd angeordnet sind und durch die Membranen erste Kammern (K1) und zweite Kammern (K2) gebildet werden, wobei die ersten Kammern (K1) zur Anode (303) hin von der bipolaren Membran (302) und die zweiten Kammern (K2) zur Anode (303) hin von der Anionen-selektiven Membran begrenzt sind, und der salzhaltigen Elektrolyt (Ely) und/oder das Absorptionsmittel (Ab) in die zweiten Kammern (K2) geleitet wird.

7. Verfahren nach einem der vorhergehenden Ansprüche, wobei als ein Salz im salzhaltigen Elektrolyt (Ely) ein Kaliumsalz, insbesondere ein Kaliumhydrogencarbonat (KHCO3) und/oder ein Kaliumsulfat, verwendet wird.

8. Verfahren nach einem der vorhergehenden Ansprüche, wobei der Elektrolyseur (EL) mit einem Kohlenstoffdioxid-Überschuss in dem Produktgas betrieben wird.

9. Verfahren nach einem der vorhergehenden Ansprüche, wobei die Elektrodialyseeinheit (ED) bei einem höheren Betriebsdruck betrieben wird als der Elektrolyseur (EL).

10. Verfahren nach einem der vorhergehenden Ansprüche, wobei das Produktgas (PG) Ethen umfasst.

11. Vorrichtung zum Durchführen des Verfahrens zur elektrochemischen Verwertung von Kohlenstoffdioxid nach einem der Ansprüche 1 bis 10 mit
- einem Elektrolyseur (EL) mit wenigstens einer Elektrolysezelle (EZ) zur Reduktion von Kohlenstoffdioxid zu einem Produktgas (PGCO2) umfassend Kohlenstoffmonoxid
- einer Gaswäschevorrichtung (GW), welche ausgestaltet ist, nicht umgesetztes Kohlenstoffdioxid aus dem Produktgas (PGCO2) umfassend Kohlenstoffmonoxid wenigstens teilweise in ein Absorptionsmittels (Ab) zu absorbieren,
- und einer Elektrodialyseeinheit (ED) mit wenigstens einer Elektrodialysezelle geeignet zum Regenerieren des während der Absorption mit Kohlenstoffdioxid angereicherten Absorptionsmittels (AbCO2).

12. Vorrichtung nach Anspruch 11, wobei die Elektrodialysezelle eine Mehrzahl von bipolaren Membranen (302) und eine Mehrzahl von Kationen-selektiven (301) oder Anionen-selektive Membranen umfasst und diese zwischen einer Anode (303) und einer Kathode (304) abwechselnd angeordnet sind.

13. Vorrichtung nach einem der Ansprüche 10 bis 12, wobei die Elektrodialyseeinheit (ED) in den Elektrolyseur (EL) integriert ist.

14. Vorrichtung nach Anspruch 13, wobei die Elektrodialyseeinheit (ED) und der Elektrolyseur (EL) eine gemeinsame Spannungsquelle umfassen.

15. Vorrichtung nach einem der Ansprüche 13 oder 14, wobei die Anzahl der Elektrolysezellen (EZ) größer ist als die Anzahl der Elektrodialysezellen.

## Claims

1. Process for electrochemical utilization of carbon dioxide, comprising the following steps:
- reducing carbon dioxide to a product gas comprising carbon monoxide (PGCO2) in an electrolysis cell (EZ) of an electrolyzer (EL),
- guiding the product gas (PGCO2) comprising carbon dioxide into a gas scrubbing apparatus (GW),
- scrubbing the product gas (PGCO2) to remove carbon dioxide by means of an absorbent (Ab) in the gas scrubbing apparatus (GW),
- regenerating the absorbent (AbCO2) in an electrodialysis cell of an electrodialysis unit (ED),
- at least partly recycling the regenerated absorbent (Ab) into the gas scrubbing apparatus (GW),
- at least partly recycling the carbon dioxide released during the regenerating as reactant gas (EG) into the electrolyzer (EL) .

2. Process according to Claim 1, wherein during the electrolysis carbon dioxide accumulates in a salt-containing liquid electrolyte (Ely) used in the electrolysis cell (EZ) and the carbon dioxide-enriched salt-containing liquid electrolyte (ElyCO2) is guided into the electrodialysis cell and the carbon dioxide content in the salt-containing liquid electrolyte is reduced by means of electrodialysis in the electrodialysis cell (EZ) .

3. Process according to Claim 2, wherein the absorbent (Ab) used in the gas scrubbing apparatus (GW) is the salt-containing liquid electrolyte (Ely) with the reduced carbon dioxide content.

4. Process according to any of the preceding claims, wherein the electrodialysis cell (ED) comprises an anode (303) and a cathode (304) and a multitude of bipolar membranes (302) and a multitude of cation-selective membranes (301) are in an alternating arrangement between anode (303) and cathode (304) and the membranes form first chambers (K1) and second chambers (K2), wherein the first chambers (K1) are bounded toward the anode (303) by the bipolar membrane (302) and the second chambers (K2) are bounded toward the anode (303) by the cation-selective membrane (301), and the salt-containing electrolyte (Ely) and/or the absorbent (Ab) is guided into the first chambers (K1).

5. Process according to Claim 4, wherein the salt-containing electrolyte (Ely) is guided first into the first chambers (K1) of the electrodialysis cell, and then into the second chambers (K2) of the electrodialysis cell.

6. Process according to any of Claims 1 to 3, wherein the electrodialysis cell comprises an anode (303) and a cathode (304) and a multitude of bipolar membranes (302) and a multitude of anion-selective membranes are in an alternating arrangement between anode (303) and cathode (304) and the membranes form first chambers (K1) and second chambers (K2), wherein the first chambers (K1) are bounded toward the anode (303) by the bipolar membrane (302) and the second chambers (K2) are bounded toward the anode (303) by the anion-selective membrane, and the salt-containing electrolyte (Ely) and/or the absorbent (Ab) is guided into the second chambers (K2).

7. Process according to any of the preceding claims, wherein a salt used in the salt-containing electrolyte (Ely) is a potassium salt, especially a potassium hydrogen carbonate (KHCO3) and/or a potassium sulfate.

8. Process according to any of the preceding claims, wherein the electrolyzer (EL) is operated with a carbon dioxide excess in the product gas.

9. Process according to any of the preceding claims, wherein the electrodialysis unit (ED) is operated at a higher operating pressure than the electrolyzer (EL).

10. Process according to any of the preceding claims, wherein the product gas (PG) comprises ethene.

11. Apparatus for performing the process for electrochemical utilization of carbon dioxide according to any of Claims 1 to 10, comprising
- an electrolyzer (EL) having at least one electrolysis cell (EZ) for reduction of carbon dioxide to a product gas (PGCO2) comprising carbon monoxide,
- a gas scrubbing apparatus (GW) configured to absorb unconverted carbon dioxide from the product gas (PGCO2) comprising carbon monoxide at least partly into an absorbent (Ab),
- and an electrodialysis unit (ED) having at least one electrodialysis cell suitable for regenerating the absorbent (AbCO2) enriched with carbon dioxide during the absorption.

12. Apparatus according to Claim 11, wherein the electrodialysis cell comprises a multitude of bipolar membranes (302) and a multitude of cation-selective membranes (301) or anion-selective membranes and these are in an alternating arrangement between an anode (303) and a cathode (304).

13. Apparatus according to any of Claims 10 to 12, wherein the electrodialysis unit (ED) is integrated into the electrolyzer (EL) .

14. Apparatus according to Claim 13, wherein the electrodialysis unit (ED) and the electrolyzer (EL) comprise a common voltage source.

15. Apparatus according to either of Claims 13 and 14, wherein the number of electrolysis cells (EZ) is greater than the number of electrodialysis cells.

## Revendications

1. Procédé de valorisation électrochimique du dioxyde de carbone, comprenant les stades suivants :
- réduction du dioxyde de carbone en un produit gazeux, comprenant du monoxyde de carbone (PGCO2 ) dans une cellule (EZ) d'électrolyse d'un électrolyseur (EL),
- Envoi du produit (PGCO2) gazeux, comprenant du dioxyde de carbone dans une installation (GW) de lavage de gaz,
- lavage du produit (PGCO2) gazeux de dioxyde de carbone au moyen d'un agent (Ab) d'absorption dans l'installation (GW) de lavage de gaz,
- régénération de l'agent (AbCO2) d'absorption dans une cellule d'électrodialyse d'une unité (ED) d'électrodialyse,
- retour, au moins en partie, de l'agent (Ab) d'absorption régénéré à l'installation (GW) de lavage de gaz,
- retour, au moins en partie, du dioxyde de carbone, dégagé pendant la régénération, comme éduit (EG) gazeux à l'électrolyseur (EL).

2. Procédé suivant la revendication 1, dans lequel on utilise, dans la cellule (EZ) d'électrolyse, un électrolyte (Ely) liquide contenant du sel, qui, pendant l'électrolyse, s'enrichit en dioxyde de carbone, et on envoie l'électrolyte (ElyCO2) liquide contenant du sel et enrichi en dioxyde de carbone à la cellule d'électrodialyse et, dans la cellule (EZ) d'électrodialyse, on diminue, au moyen d'une électrodialyse, la teneur en dioxyde de carbone de l'électrolyte liquide contenant du sel.

3. Procédé suivant la revendication 2, dans lequel on utilise, comme agent (Ab) d'absorption dans l'installation de lavage (GW) de gaz, l'électrolyte (Ely) liquide contenant du sel à teneur diminuée en dioxyde de carbone.

4. Procédé suivant l'une des revendications précédentes, dans lequel la cellule (ED) d'électrodialyse comprend une anode (303) et une cathode (304) et, entre l'anode (303) et la cathode (304), une pluralité de membranes (302) bipolaires et une pluralité de membranes (301) sélectives aux cations sont disposées en alternance et on forme par les membranes des premières chambres (K1) et des deuxièmes chambres (K2), les premières chambres (K1) étant délimitées vers l'anode (303) par la membrane (302) bipolaire et les deuxièmes chambres (K2) vers l'anode (303) par la membrane (301) sélective aux cations, et on envoie l'électrolyte (Ely) contenant du sel et/ou l'agent (Ab) d'absorption dans les première chambres (K1).

5. Procédé suivant la revendication 4, dans lequel on envoie l'électrolyte (Ely) contenant du sel d'abord dans les premières chambres (K1) de la cellule d'électrodialyse et ensuite on l'envoie dans les deuxièmes chambres (K2) de la cellule d'électrodialyse.

6. Procédé suivant l'une des revendications 1 à 3, dans lequel la cellule d'électrodialyse comprend une anode (303) et une cathode (304) et, entre l'anode (303) et la cathode (304), une pluralité de membranes (302) bipolaires et une pluralité de membranes sélectives aux anions sont disposées en en alternance et on forme, par les membranes, des premières chambres (K1) et des deuxièmes chambres (K2), les premières chambres (K1) étant délimitées vers l'anode (303) par la membrane (302) bipolaire et les deuxièmes chambres (K2) vers l'anode (303) par la membrane sélective aux anions et on envoie l'électrolyte (Ely) contenant du sel et/ou l'agent (Ab) d'absorption dans les deuxièmes chambres (K2).

7. Procédé suivant l'une des revendications précédentes, dans lequel on utilise, comme sel, dans l'électrolyte (Ely) contenant du sel, un sel de potassium, notamment un bicarbonate de potassium (KHCO3) et/ou un sulfate de potassium.

8. Procédé suivant l'une des revendications précédentes, dans lequel on fait fonctionner l'électrolyseur (EL) avec un excès de dioxyde de carbone dans le produit gazeux.

9. Procédé suivant l'une des revendications précédentes, dans lequel on fait fonctionner l'unité (ED) d'électrodialyse sous une pression de fonctionnement plus haute que l'électrolyseur (EL).

10. Procédé suivant l'une des revendications précédentes, dans lequel le produit (PG) gazeux comprend de l'éthylène.

11. Installation pour effectuer le procédé de valorisation électrochimique de dioxyde de carbone suivant l'une des revendications 1 à 10, comprenant
- un électrolyseur (EL) ayant au moins une cellule (EZ) d'électrolyse pour la réduction du dioxyde de carbone en un produit (PGCO2) gazeux, comprenant du monoxyde de carbone,
- une installation (GW) de lavage de gaz, qui est conformée pour absorber, au moins en partie dans un agent (Ab) d'absorption, du dioxyde de carbone inaltéré du produit (PGCO2) gazeux, comprenant du monoxyde de carbone,
- et une unité (ED) d'électrodialyse ayant au moins une cellule d'électrodialyse propre à régénérer l'agent (AbCO2) d'absorption enrichi en dioxyde de carbone pendant l'absorption.

12. Installation suivant la revendication 11, dans laquelle la cellule d'électrodialyse comprend une pluralité de membranes (302) bipolaires et une pluralité de membranes sélectives aux cations (301) ou sélectives aux anions et celles-ci sont disposées en alternance entre une anode (303) et une cathode (304).

13. Installation suivant l'une des revendications 10 à 12, dans laquelle l'unité (ED) d'électrodialyse est intégrée à l'électrolyseur (EM).

14. Installation suivant la revendication 13, dans laquelle l'unité (ED) d'électrodialyse et l'électrolyseur (EL) comprennent une source de tension commune.

15. Installation suivant l'une des revendications 13 ou 14, dans laquelle le nombre des cellules (EZ) d'électrolyse est plus grand que le nombre des cellules d'électrodialyse.
